# DEMANDE DE BREVET EUROPEEN

(11) **EP 1 150 219 A1**
(43) Date de publication de la demande: **31.10.2001**
(21) Numéro de dépôt: 01400946.8
(22) Date de dépôt: 12.04.2001
(51) Int. Cl.: G06F 17/30

(54) **Système et procédé de définition dynamique d'un document multimédia caractérisant un centre d'intérêt d'un utilisateur**

(30) Priorité: 17.04.2000 FR 0004922
(71) Demandeur: ALCATEL, 75008 Paris (FR)
(72) Inventeur: Maurizot, Mariette, 35000 Rennes (FR); Machecourt, Hélène, 91190 Gif sur Yvette (FR); Colaviti, Eric, 91080 Courcouronnes (FR); Lechervy, Yves, 91000 Evry (FR)
(74) Mandataire: Sciaux, Edmond

(57) **Abrégé**

L'invention concerne un système de définition dynamique d'un document multimédia caractérisant un centre d'intérêt d'un utilisateur, qui comprend un analyseur (1) apte à générer un descripteur (D) exprimant un contenu sémantique et analytique d'un document, un comparateur (2) pour évaluer une distance entre deux descripteurs, un filtre (3) pour sélectionner les descripteurs les plus proches d'un descripteur cible prédéterminé, une interface (4) pour présenter des documents sélectionnés et pour permettre à l'utilisateur d'affecter une note de pertinence à chaque document, un synthétiseur de descripteur (5) acceptant, en entrée, plusieurs descripteurs de documents et fournissant, en sortie, un descripteur défini comme un mélange des descripteurs fournis en entrée.

L'invention concerne également un procédé de définition dynamique d'un document multimédia caractérisant un centre d'intérêt d'un utilisateur

## Description

La présente invention a pour objet un système et un procédé de définition dynamique d'un document multimédia caractérisant un centre d'intérêt d'un utilisateur.

Dans la présente description, on entend par document multimédia tout document numérique contenant du texte, du son, des images fixes ou des images animées, y compris des dessins, ces différents composants pouvant être combinés entre eux.

On entend par description d'un document multimédia toute représentation sémantique, syntaxique, analytique d'un document multimédia, ou une combinaison de ces représentations. Il faut remarquer qu'une combinaison de descriptions est elle-même une description qui correspond à un document virtuel, du fait que le descripteur obtenu n'a pas de document physique correspondant.

On sait que l'accès à des informations disséminées sur des réseaux de grande taille, tels qu'Internet, ou contenues dans des bases de données très volumineuses, nécessite le recours à des outils spécialisés.

Certains de ces outils sont définis comme étant de type « push », d'autres comme étant de type « pull ».

Dans un système push, l'utilisateur définit son profil en indiquant ses centres d'intérêts, puis des documents ayant trait aux centres d'intérêts qu'il a définis lui sont proposés de manière asynchrone, à mesure que le système les rencontre et les analyse.

Dans un système pull, l'utilisateur définit une requête, puis attend une réponse sous la forme d'une liste de documents satisfaisant à cette requête.

Sur Internet, les systèmes pull, communément désignés moteurs de recherches, sont devenus indispensables compte tenu de la grande quantité de documents disponibles.

Les recherches effectuées par les moteurs de recherche occasionnent des problèmes de deux natures.

En premier lieu, le nombre très élevé de documents disponibles rend impossible leur consultation exhaustive à l'instant où un utilisateur effectue une requête.

En second lieu, la grande diversité de documents multimedia rencontrés, certains contenant du texte, d'autres du son, d'autres encore une combinaison de texte et d'images par exemple, ne permet pas leur comparaison rapide et systématique.

Face à ces problèmes, il a déjà été proposé que les moteurs de recherche procèdent par reconnaissance de mots-clés pour sélectionner des documents. Dans ce cas, on procède à une indexation des documents disponibles en attachant à chacun d'eux une liste de mots-clés et c'est cette liste de mots-clés qui est comparée à des mots saisis par l'utilisateur en tant que critères de recherche.

Cette solution connaît un certain nombre de limites.

En particulier, si la création des listes de mots-clés est parfaitement automatisable pour des documents textes mémorisés comme tels dans le réseau, il en va différemment des documents contenant du son ou des images, lesquels doivent être analysés manuellement pour se voir chacun affecter une liste de mots-clés.

Il en va de même de tous les documents qui contiennent du texte mais sont enregistrés sous forme d'images, sauf à convertir ces derniers documents en fichiers textes par un traîtement de reconnaissance de caractères.

Certains moteurs de recherche utilisent un classement des documents par domaines, ce qui leur permet de restreindre le champ d'investigation pour chaque requête à un sous ensemble de documents. Les critères de recherche saisis par l'utilisateur sont d'abord analysés en vue d'une sélection d'un ou de plusieurs domaines devant faire l'objet de la recherche, puis la recherche proprement dite est limitée à la liste restreinte de domaines définissant le sous-ensemble de documents.

La difficulté de cette méthode est qu'elle requiert elle aussi un classement préalable des documents, ce qui mobilise d'importants moyens humains.

De plus, on constate dans la pratique que les domaines sont souvent relativement larges, de sorte qu'une sélection par mots-clés dans le sous-ensemble de documents ne supprime pas complètement les difficultés exposées ci-dessus.

Un autre type connu de moteur de recherche utilise des définitions par ontologie.

Cette méthode consiste à définir chaque domaine par le vocabulaire spécialisé qui lui correspond et à déceler, lors de la recherche, toute similitude de vocabulaire entre la requête formulée par l'utilisateur et la définition ontologique de chaque document balayé.

Le problème de cette méthode est que les définitions ontologiques ne sont disponibles que pour quelques domaines, en général ceux concernant les milieux techniques ou scientifiques.

Les moteurs de recherche par ontologie ne permettent donc pas non plus de surmonter les problèmes liés à la qualité des recherches effectuées sur des grands volumes de documents multimedia.

Jusqu'à présent, les améliorations apportées aux moteurs de recherche n'ont porté que sur la préparation des documents disponibles, de manière que leur comparaison avec la requête formulée par l'examinateur soit rendue plus facile et plus efficace.

Ces améliorations n'ont concerné ni le type de documents susceptibles d'être balayés, lesquels sont souvent uniquement ceux contenant du texte, ni sur l'expression de la requête par l'utilisateur, cette dernière étant susceptible d'imperfections du fait que l'utilisateur a généralement une connaissance insuffisante ou imprécise du domaine qu'il recherche.

La présente invention vise à fournir une solution permettant d'atteindre tous les documents multimedia disponibles, c'est-à-dire pas seulement les documents texte, mais également ceux renfermant du son, des images, des vidéos ou une combinaison de ceux-ci.

En outre, selon l'invention, un travail préparatoire sur les documents disponibles est nécessaire pour permettre leur balayage lors des recherches, mais ce travail ne requiert aucune intervention humaine car il résulte d'une analyse automatique.

Enfin, la présente invention permet d'atteindre les documents les plus pertinents même dans l'hypothèse où l'utilisateur n'est pas en mesure de définir précisément l'objet de ses recherches.

La présente invention a tout d'abord pour objet un système de définition dynamique d'un document multimédia caractérisant un centre d'intérêt d'un utilisateur, qui se caractérise en ce qu'il comprend, en combinaison :
- un analyseur apte à générer, à partir d'un document multimédia, un descripteur dudit document, exprimant, dans un langage descriptif donné, un contenu sémantique et analytique du document,
- un comparateur pour évaluer une distance séparant des descripteurs de deux documents obtenus par l'analyseur précédent ou par un dispositif d'analyse similaire,
- un filtre pour sélectionner les documents dont les descripteurs sont les plus proches, au sens du comparateur, d'un descripteur cible prédéterminé,
- une interface pour proposer à l'utilisateur les documents sélectionnés par le filtre, et pour permettre audit utilisateur d'affecter une note de pertinence à chaque document qui lui est proposé, dans le cas où ce document coïncide effectivement avec son centre d'intérêt,
- un synthétiseur de descripteur acceptant, en entrée, plusieurs descripteurs de documents et fournissant, en sortie, un descripteur défini comme un mélange des descripteurs fournis en entrée.

Dans la présente invention, on entend par mélange de descripteurs un descripteur se trouvant sensiblement à équidistance, au sens du comparateur, des descripteurs fournis en entrée.

L'invention peut être intégrée aussi bien dans un système dit « pull », dans lequel le centre d'intérêt correspond à la requête de l'utilisateur, que dans un système dit « push », dans lequel le centre d'intérêt correspond au profil de l'utilisateur.

Dans un système pull, l'invention permet d'affiner la requête de l'utilisateur. Elle fournit alors un moteur dynamique de recherche de documents multimédia.

Dans un système push, elle permet d'affiner le centre d'intérêt de l'utilisateur.

Elle fournit alors un système dynamique de suivi de profil d'utilisateur.

Le système selon l'invention fonctionne de la manière suivante.

Chaque utilisateur définit son centre d'intérêt (système push), ou sa requête (système pull), c'est-à-dire le sujet sur lequel il souhaite obtenir des documents pertinents.

A cet effet, l'utilisateur fournit un document représentatif de ce qu'il recherche. Ce document peut contenir du texte, du son ou des images ou une combinaison de ceux-ci.

A défaut de document pertinent préexistant, l'utilisateur peut créer un document multimédia. Par exemple, il peut saisir quelques lignes dans un style abrégé ou en langage naturel, pour constituer un document texte à fournir au système, modifier une image existante, ou encore tracer un dessin à main levée.

Le document fourni par l'utilisateur est confié à l'analyseur, qui en extrait une signification sémantique et analytique, puis synthétise un descripteur, appelé descripteur cible initial, caractérisant initialement le centre d'intérêt ou la requête de l'utilisateur.

Le descripteur cible initial est exprimé dans un langage descriptif qui est de préférence normalisé.

Préalablement à ces opérations, et indépendamment de l'instant où l'utilisateur définit son centre d'intérêt, chaque document disponible du domaine de la recherche est analysé par le même analyseur, ou par un dispositif d'analyse similaire, de manière qu'un descripteur dudit document, exprimé dans le même langage descriptif que le descripteur cible, soit généré.

Suite à cette analyse, les descripteurs des documents disponibles dans le domaine de la recherche sont systématiquement comparés, par le comparateur, au descripteur cible caractérisant le centre d'intérêt de l'utilisateur ou sa requête.

Le comparateur évalue alors une distance entre chaque descripteur et le descripteur cible, en se basant sur des critères métriques prédéfinis liés à la méthode de filtrage et au langage descriptif utilisés.

La distance ainsi évaluée est fournie, pour chaque descripteur, au filtre qui, par comparaison avec un seuil prédéterminé, sélectionne les documents dont les descripteurs sont les plus proches du descripteur cible, c'est-à-dire éloignés du descripteur cible d'une distance inférieure au seuil prédéterminé.

Le système peut ainsi sélectionner, dans l'ensemble des documents constituant le domaine de la recherche, ceux susceptibles de correspondre au centre d'intérêt ou à la requête de l'utilisateur tel que ce dernier l'a initialement défini.

L'interface du système propose ensuite les documents filtrés à l'utilisateur. Grâce à cette interface, l'utilisateur peut confirmer ou infirmer le fait que chaque document filtré coïncide effectivement avec son centre d'intérêt, en attribuant une note de pertinence à chaque document pour lequel il confirme son intérêt. Cette note de pertinence peut être un simple marquage de confirmation ou, dans une version plus élaborée du système selon l'invention, une valeur sur une échelle de notes, auquel cas l'utilisateur peut quantifier l'intérêt qu'il porte au document sélectionné.

A l'issue de ce travail fourni par l'utilisateur, le système dispose d'un retour utilisateur qu'il est en mesure d'exploiter grâce au synthétiseur de descripteur.

En effet, le synthétiseur de descripteur accepte en entrée d'une part, le descripteur cible initial, qui définit le centre d'intérêt ou la requête tel que l'utilisateur le ou la percevait avant d'avoir examiné les documents filtrés, et d'autre part, les descripteurs des documents auxquels l'utilisateur a affecté une note de pertinence.

En sortie, le synthétiseur de descripteur fournit un nouveau descripteur cible qui est le mélange des descripteurs fournis en entrée, c'est-à-dire qu'il se situe en quelque sorte au barycentre desdits descripteurs, au sens des critères métriques utilisés par l'analyseur et le filtre.

Le centre d'intérêt de l'utilisateur est ainsi redéfini une première fois d'une manière plus fine et plus précise et correspond davantage à l'intérêt sous-jacent de l'utilisateur mais non clairement énoncé par celui-ci.

Lors d'une nouvelle itération, chaque document disponible du domaine de la recherche peut être à nouveau comparé au descripteur cible redéfini, puis proposé à l'utilisateur dans le cas où la distance de son descripteur au nouveau descripteur cible est inférieure au seuil prédéfini, puis se voir éventuellement attribuer une note de pertinence par l'utilisateur.

On comprend que, par itérations successives, le système aboutit à une définition optimale du centre d'intérêt de l'utilisateur, ou de sa requête, et lui propose ainsi des documents de plus en plus pertinents.

On comprend également que, puisque la description repose sur une analyse de documents multimédia, le moteur de recherche est en mesure de proposer à l'utilisateur toutes sortes de documents, et pas seulement des documents contenant du texte.

Conformément à l'invention, l'utilisateur peut définir initialement son centre d'intérêt, ou sa requête, en fournissant plusieurs documents. Dans ce cas, chaque document fourni initialement est d'abord analysé pour créer son descripteur, sauf si cette opération est inutile du fait que le document a déjà été analysé, puis tous les descripteurs ainsi obtenus sont traités par le synthétiseur qui fabrique un descripteur cible initial.

Les opérations suivantes sont inchangées.

Les descripteurs des documents peuvent être exprimés selon le projet de norme MPEG-7 dont on trouvera une description sur Internet, sur le site de l'Organisation Internationale pour la Standardisation (ISO) :
http://drogo.cselt.stet.it/mpeg/standards/mpeg-7/mpeg-7.htm dans sa mise à jour en vigueur au 21 janvier 2000.

Ce projet de norme a pour but de décrire des documents multimedia dans un format utilisable par différents logiciels, notamment en vue d'un accès à l'information disponible dans ces documents.

Selon cette norme, un descripteur regroupe un certain nombre de caractéristiques concernant le document multimedia analysé.

Un des avantages du système selon l'invention est que chaque document entrant dans le domaine de la recherche ne doit être analysé qu'une seule fois, car au cours des itérations successives nécessaires à la définition optimale du centre d'intérêt de l'utilisateur, seule la distance entre le descripteur de chaque document et le nouveau descripteur cible est recalculée, le descripteur de chaque document étant généré une fois pour toutes.

En d'autres termes, le descripteur d'un document est indépendant de l'objet cherché par l'utilisateur, et de la manière dont cet objet est défini.

La présente invention a également pour objet un procédé de définition dynamique d'un document multimédia caractérisant un centre d'intérêt d'un utilisateur, parmi un ensemble de documents multimédia auxquels sont individuellement attachés des descripteurs exprimant, dans un langage descriptif donné, un contenu sémantique et analytique de chaque document, caractérisé en ce qu'il consiste à exécuter les étapes suivantes :
a) définition d'un centre d'intérêt d'un utilisateur par création d'un descripteur cible exprimé dans le langage descriptif donné
b) évaluation d'une distance entre le descripteur de chaque document multimédia et le descripteur cible,
c) filtrage des documents multimédia par sélection de ceux dont les descripteurs sont les plus proches, au sens de la distance ci-dessus, du descripteur cible,
d) proposition des documents sélectionnés à l'utilisateur,
e) récupération d'une note de pertinence attribuée par l'utilisateur à chaque document considéré par lui comme coïncidant avec son centre d'intérêt,
f) synthèse d'un nouveau descripteur cible défini comme un mélange de l'ancien descripteur cible et des descripteurs des documents affectés d'une note de pertinence,
g) itération à partir de l'étape b).

Le procédé selon l'invention est intéressant en ce qu'il redéfinit en permanence le centre d'intérêt de l'utilisateur, ou sa requête, ce qui est particulièrement utile car l'utilisateur est initialement incapable de définir précisément son centre d'intérêt, du fait qu'il peut ignorer certaines notions utiles du domaine qui l'intéresse, le vocabulaire le plus approprié, ainsi que les références liées à ce domaine.

Grâce au procédé selon l'invention, le centre d'intérêt ou la requête de l'utilisateur s'affine automatiquement, ce qui permet à l'utilisateur d'accéder aux documents les plus pertinents.

En outre, le procédé selon l'invention fait automatiquement évoluer la définition du centre d'intérêt de l'utilisateur, à mesure qu'il devient un spécialiste du domaine recherché.

En effet, alors qu'il n'est encore qu'un novice dans le domaine considéré, l'utilisateur s'intéresse à des documents d'ordre général coïncidant avec la définition initiale de son céntre d'intérêt. Mais de façon marginale, certains documents spécialisés lui sont proposés.

A mesure qu'il se spécialise dans une branche du domaine considéré, il marque les documents spécialisés correspondants d'une note de pertinence.

Ce marquage déplace progressivement le descripteur cible, caractérisant le centre d'intérêt de l'utilisateur, en direction de la spécialisation qu'il poursuit.

Ainsi, la définition du centre d'intérêt, mise à jour par le système, s'adapte en permanence au profil de l'utilisateur, et ce sens que l'utilisateur n'a pas à fournir d'autre travail que celui consistant à confirmer ou infirmer la sélection des documents opérée par le moteur de recherche.

Dans le but de mieux faire comprendre l'invention, on va en décrire maintenant un mode de mise en oeuvre donné à titre d'exemple non limitatif, en référence au dessin annexé dans lequel :
- les figures 1a à 1e représentent les composants d'un système selon l'invention et
- la figure 2 est un organigramme de l'algorithme utilisé par le système selon l'invention pour effectuer une recherche personnalisée.

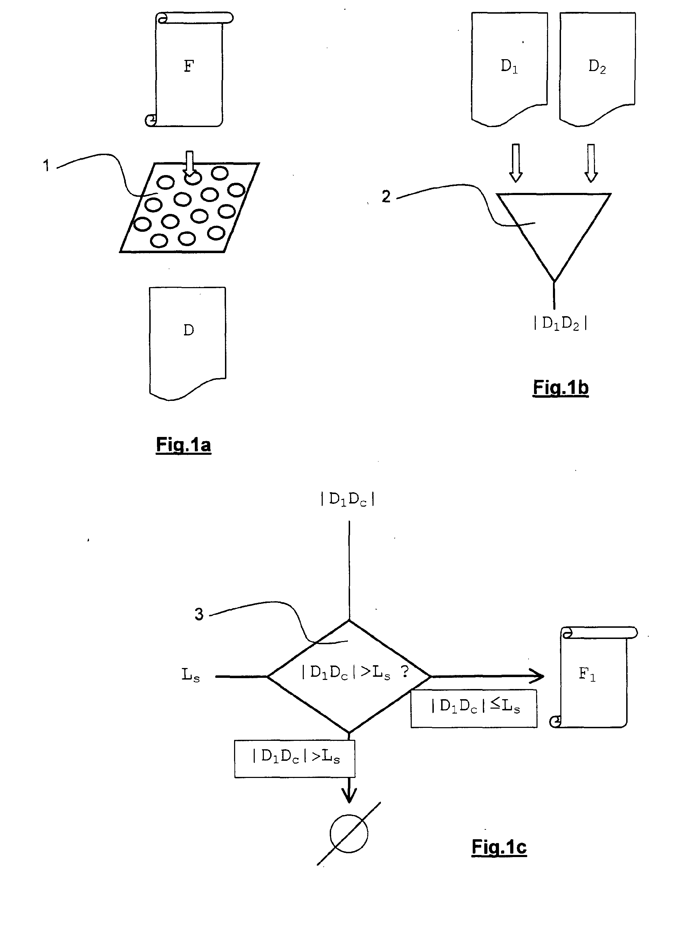

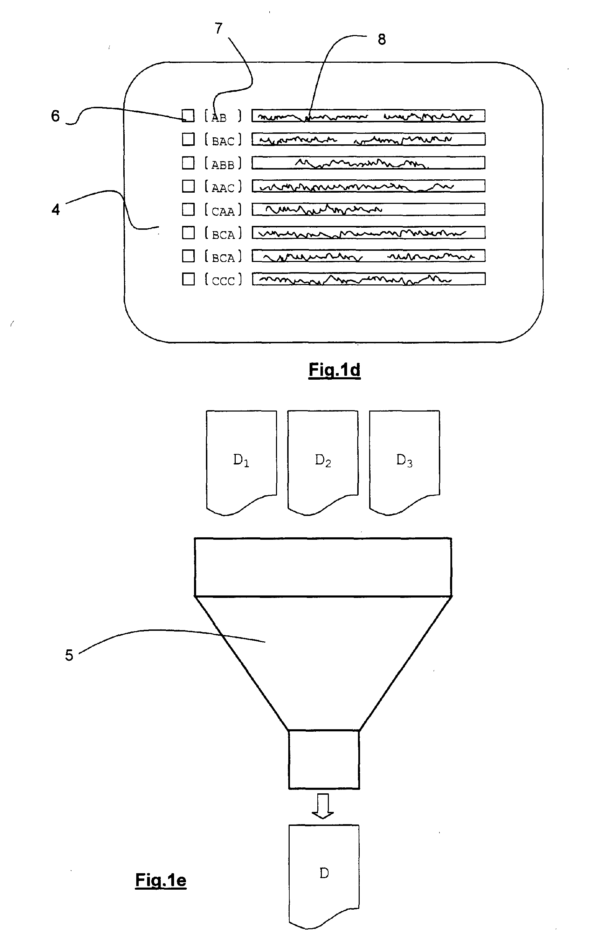

Sur les figures 1a à 1e, on retrouve les cinq composants du système selon l'invention, à savoir l'analyseur 1, le comparateur 2, le filtre 3, l'interface **4** et le synthétiseur de descripteur 5.

L'analyseur 1, bien connu de l'homme du métier, est un moyen qui a pour fonction d'extraire une signification sémantique et analytique d'un document multimédia F pour synthétiser un descripteur D de ce document.

L'opération d'analyse mise en oeuvre par l'analyseur fait appel à différentes techniques, en fonction du type de données à analyser. L'analyse de textes utilise des méthodes syntaxiques et sémantiques, l'analyse de sons utilise des programmes de reconnaissance de sons et de locuteurs, l'analyse d'images fixes opère sur les formes, les couleurs et la texture des objets contenus dans l'image, l'analyse d'images animées ou vidéo consiste à segmenter la séquence filmée en différents plans et, dans chaque plan, à isoler les objets mobiles, au sens du mouvement dans la scène réelle.

Le descripteur D est exprimé suivant un langage prédéterminé, par exemple celui de MPEG-7.

Le comparateur 2 a pour fonction de comparer deux descripteurs D₁ et D₂ en calculant la distance |D₁D₂| qui les sépare. Cette distance dépend des critères métriques utilisés au moment de la génération des descripteurs.

Le filtre 3 accepte en entrée une distance |D₁D_{c}| calculée par le comparateur 2 entre le descripteur D₁ d'un document F₁ et un descripteur cible de référence D_{c}, puis fournit en sortie un booléen positionné à vrai ou à faux, selon que la distance fournie en entrée est supérieure ou inférieure à une valeur de seuil Lₛ prédéterminée. La valeur de ce booléen permet de sélectionner ou non le document F₁ correspondant au descripteur D₁.

L'interface 4 comporte essentiellement un écran sur lequel les documents sélectionnés par le filtre 3 sont proposés à l'utilisateur.

Chaque document est présenté sur une ligne, avec une case à cocher 6, un nom abrégé 7 et un résumé 8 de son contenu.

Le terme résumé est ici employé au sens large et pas uniquement dans le sens de réduction du texte. Par exemple, le résumé d'une vidéo est constitué par un ensemble d'images clés définies suivant différents critères.

L'utilisateur peut, à travers l'interface 4, confirmer la sélection d'un document en cochant la case 6 présente sur la ligne correspondante.

Dans cet exemple, l'utilisateur ne peut que confirmer la sélection d'un document, mais le système pourrait également accepter une note de pertinence, par laquelle l'utilisateur exprimerait le fait que le document en question répond plus ou moins à sa demande d'informations.

Le synthétiseur de descripteur 5 accepte en entrée plusieurs descripteurs de documents D₁, D₂, D₃ et calcule leur barycentre, c'est-à-dire un descripteur D qui, pour chaque caractéristique donnée des descripteurs fournis en entrée, comporte une caractéristique qui constitue une sorte de moyenne pondérée des caractéristiques de chaque descripteur. Le descripteur D est un mélange des descripteurs D₁, D₂, D₃.

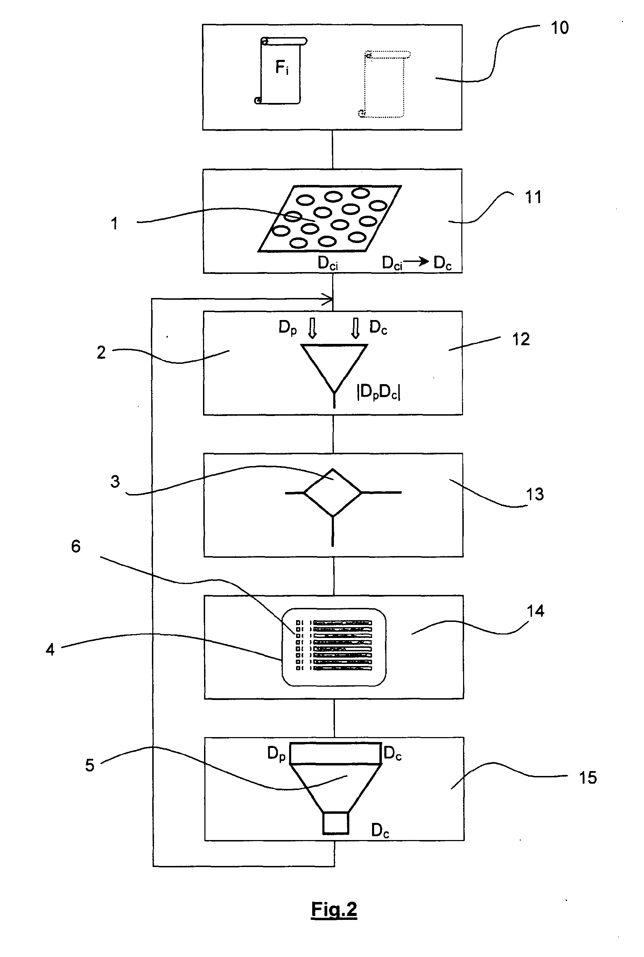

L'algorithme représenté à la figure 2 comprend une séquences d'étapes qui correspond aux opérations effectuées par le système pour exécuter une recherche coïncidant avec le centre d'intérêt d'un utilisateur.

Préalablement, une analyse des documents constituant le domaine de la recherche a été réalisée. Cette analyse peut s'effectuer soit par itération sur l'ensemble des documents, soit ponctuellement sur chaque document introduit dans le domaine de la recherche, au moment de son introduction. L'opération d'analyse se traduit par la génération d'un descripteur attaché à chaque document.

On va maintenant décrire chaque étape de la séquence de la figure 2.

A la première étape 10, l'utilisateur introduit dans le moteur de recherche une information destinée à définir son profil initial.

Cette information peut être énoncée en langage naturel, ou constituée par une série de mots clés saisis par l'utilisateur ou encore par tout document, textuel ou non, censé correspondre au centre d'intérêt de l'utilisateur.

Par exemple, l'utilisateur définit son centre d'intérêt par l'expression « la conquête spatiale », cette définition sera appelée document Fᵢ. L'exemple a été construit en juillet 1999, la base de documents balayés contient des articles concernant des thèmes variés et quelques textes parlant du 30^{ème} anniversaire de l'arrivée de l'homme sur la Lune, et relatant la première mission de la NASA commandée par une femme.

A la seconde étape 11, l'analyseur 1 traite le document F; fourni par l'utilisateur et génère, à partir de ce document, un descripteur cible initial D_{ci}, par exemple selon la norme MPEG-7.

Pour faciliter la compréhension, on considére que ce descripteur D_{ci} est constitué par l'expression suivante : « conquête spatiale »

Ce descripteur cible initial est pris comme descripteur cible courant D_{c} pour les itérations à venir.

Lors de la troisième étape 12, le descripteur cible D_{c} défini à l'étape précédente est comparé aux descripteurs Dₚ de chacun des documents du domaine recherché, ces descripteurs étant issus de l'analyse précédemment décrite.

Le comparateur associe à chaque document balayé une distance |DₚD_{c}| entre son descripteur et le descripteur cible. Cette distance caractérise la pertinence supposée du document balayé par rapport au centre d'intérêt de l'utilisateur.

Lors de l'étape suivante 13, le filtre 3 écarte du lot de documents tous ceux dont le descripteur est éloigné du descripteur cible d'une distance supérieure à un seuil prédéterminé Lₛ.

De cette sélection sont issus un nombre restreint de documents, lesquels sont proposés à l'utilisateur lors de l'étape suivante 14 par l'interface 4.

L'utilisateur peut alors confirmer ou pas l'intérêt qu'il porte aux documents qui lui sont présentés, en cochant les cases 6 des documents qu'il retient comme pertinents.

C'est à cette occasion que l'utilisateur envoie au moteur de recherche le retour utilisateur qui lui permet d'affiner la définition du profil de l'utilisateur.

Ce recentrage du profil de l'utilisateur s'effectue en envoyant, lors de l'étape suivante 15, chaque descripteur D_{P} des documents considérés comme pertinents par l'utilisateur au synthétiseur 5 de descripteur cible, en y ajoutant le descripteur cible courant D_{c} utilisé lors de la comparaison avec les descripteurs des documents.

Le synthétiseur 5 de descripteur cible fournit un nouveau descripteur cible D_{c} qui est un mélange de tous les descripteurs fournis en entrée.

Le nouveau descripteur cible D_{c} obtenu redéfinit le profil de l'utilisateur et peut être utilisé à son tour comme descripteur cible initial lors d'une itération suivante qui permettra de sélectionner d'autres documents plus pertinents pour l'utilisateur, compte tenu de la définition recentrée de son centre d'intérêt.

Dans l'exemple de la conquête spatiale, on obtient le descripteur cible suivant après cinq itérations et après avoir orienté la recherche dans la direction de l'anniversaire de l'arrivée de l'homme sur la lune :
« navette, collins, eileen, columbia, nasa, femme, astronaute, équipage, navette-spatiale, mission, lune, cap canaveral, télescope, neil armstrong, lancement, conquête, monde, rayons-x, aldrin buzz, chandra, moteur, air, floride, espace, vol »

On comprend que le système et le procédé selon l'invention peuvent être mis en oeuvre par un programme enregistré dans un dispositif d'ordinateur et défini par la suite d'instructions suivantes :
- d'une part, analyse de chaque document multimédia pour générer un descripteur dudit document, exprimant, dans un langage descriptif donné, un contenu sémantique et analytique du document,
- d'autre part, définition d'un centre d'intérêt d'un utilisateur par création d'un descripteur cible exprimé dans le langage descriptif donné et exécution, d'une manière itérative, des étapes a) à e) suivantes :
   a) évaluation d'une distance séparant le descripteur de chaque document multimédia analysé et le descripteur cible,
   b) filtrage des documents multimédia analysés pour sélectionner ceux dont les descripteurs sont les plus proches, au sens de la distance ci-dessus, du descripteur cible,
   c) proposition des documents filtrés à l'utilisateur,
   d) récupération d'une note de pertinence attribuée par l'utilisateur à chaque document considéré par lui comme coïncidant avec son centre d'intérêt,
   e) synthèse d'un nouveau descripteur cible défini comme un mélange de l'ancien descripteur cible et des descripteurs des documents affectés d'une note de pertinence.

Il est bien entendu que le mode de mise en oeuvre qui vient d'être décrit ne présente aucun caractère limitatif et qu'il pourra recevoir toute modification désirable sans sortir pour cela du cadre de l'invention.

En particulier, l'exemple de descripteur présenté ici est volontairement simplificateur, des descripteurs exprimés selon la norme MPEG-7 étant bien entendu nettement plus complexes.

## Revendications

1. Système de définition dynamique d'un document multimédia caractérisant un centre d'intérêt d'un utilisateur, **caractérisé en ce qu'**il comprend, en combinaison :
- un analyseur (1) apte à générer, à partir d'un document multimédia (F), un descripteur (D) dudit document, exprimant, dans un langage descriptif donné, un contenu sémantique et analytique du document,
- un comparateur (2) pour évaluer une distance séparant des descripteurs de deux documents obtenus par l'analyseur précédent ou par un dispositif d'analyse similaire,
- un filtre (3) pour sélectionner les documents dont les descripteurs sont les plus proches, au sens du comparateur, d'un descripteur cible prédéterminé,
- une interface (4) pour proposer à l'utilisateur les documents sélectionnés par le filtre, et pour permettre audit utilisateur d'affecter une note de pertinence à chaque document qui lui est proposé, dans le cas où ce document coïncide effectivement avec son centre d'intérêt,
- un synthétiseur de descripteur (5) acceptant, en entrée, plusieurs descripteurs de documents et fournissant, en sortie, un descripteur défini comme un mélange des descripteurs fournis en entrée.

2. Système selon la revendication 1, **caractérisé en ce que** l'interface (4) permet à l'utilisateur de noter chaque document en le marquant comme pertinent ou non pertinent.

3. Système selon l'une quelconque des revendications 1 et 2, **caractérisé en ce qu'**il s'applique à des textes, des sons, des images fixes ou animées, y compris des dessins.

4. Moteur dynamique de recherche de documents multimédia, **caractérisé en ce qu'**il est constitué par un système selon l'une quelconque des revendications 1 à 3.

5. Système dynamique de suivi de profil d'utilisateur, **caractérisé en ce qu'**il est constitué par un système selon l'une quelconque des revendications 1 à 3.

6. Procédé de définition dynamique d'un document multimédia caractérisant un centre d'intérêt d'un utilisateur, parmi un ensemble de documents multimédia auxquels sont individuellement attachés des descripteurs exprimant, dans un langage descriptif donné, un contenu sémantique et analytique de chaque document, **caractérisé en ce qu'**il consiste à exécuter les étapes suivantes :
a) définition d'un centre d'intérêt d'un utilisateur par création d'un descripteur cible exprimé dans le langage descriptif donné
b) évaluation d'une distance entre le descripteur de chaque document multimédia et le descripteur cible,
c) filtrage des documents multimédia par sélection de ceux dont les descripteurs sont les plus proches, au sens de la distance ci-dessus, du descripteur cible,
d) proposition des documents sélectionnés à l'utilisateur,
e) récupération d'une note de pertinence attribuée par l'utilisateur à chaque document considéré par lui comme coïncidant avec son centre d'intérêt,
f) synthèse d'un nouveau descripteur cible défini comme un mélange de l'ancien descripteur cible et des descripteurs des documents affectés d'une note de pertinence,
g) itération à partir de l'étape b).

7. Procédé selon la revendication 6, **caractérisé en ce que** la note de pertinence attribuée à un document est constituée par un marquage dudit document comme coïncidant avec le centre d'intérêt de l'utilisateur.

8. Procédé selon l'une quelconque des revendications 6 et 7, **caractérisé en ce qu'**il s'applique à des textes, des sons, des images, fixes ou animées, y compris des dessins.
